(19) Europäisches Patentamt
European Patent Office
Office européen des brevets

(11) Numéro de publication: **0 343 087**
**A1**

(12) # DEMANDE DE BREVET EUROPEEN

(21) Numéro de dépôt: **89420157.3**

(22) Date de dépôt: **27.04.89**

(51) Int. Cl.4: **C 08 G 77/38**
C 08 G 77/14, C 08 L 27/06,
C 10 M 107/50

(30) Priorité: **10.05.88 FR 8806558**

(43) Date de publication de la demande:
**23.11.89 Bulletin 89/47**

(84) Etats contractants désignés:
**AT BE CH DE ES FR GB GR IT LI LU NL SE**

(71) Demandeur: **RHONE-POULENC CHIMIE**
**25, quai Paul Doumer**
**F-92408 Courbevoie Cédex (FR)**

(72) Inventeur: **Chizat, François**
**27, rue Alexis Carrel**
**F-69500 Bron (FR)**

(74) Mandataire: **Seugnet, Jean Louis et al**
**RHONE-POULENC CHIMIE Service Brevets Chimie**
**Centre de Recherches des Carrières B.P. 62**
**F-69192 Saint-Fons Cédex (FR)**

(54) **Diorganopolysiloxane à fonction itaconate.**

(57) La présente invention concerne un diorganopolysiloxane portant par molécule au moins un motif de formule :

$$ZR_aSiO_{\frac{3-a}{2}} \quad (1)$$

dans laquelle :
- a est 1 ou 2,
- le symbole Z est choisi parmi les radicaux $-CH_2CH(COOR')CH_2COOR'$ et $-c(CH_3)(COOR')\ CH_2\ COOR'$,
- les symboles R, identiques ou différents, sont choisis parmi les radicaux alkyle en $C_1$-$C_{20}$, vinyle, phényle et trifluoro-3,3,3 propyle et, dans le cas où a = 2 des radicaux R peut être un hydroxyle,
- les symboles R′, identiques ou différents, sont choisis parmi les radicaux hydrocarbonés monovalents en $C_1$-$C_{12}$ et les radicaux monovalents alcoxyalkyle en $C_2$-$C_{12}$.

Les polymères selon l'invention peuvent être préparés par hydrolyse et polycondensation ou par hydrosylilation.

Les polymères selon l'invention sont utilisables notamment comme lubrifiant du PVC et comme fluide hydraulique.

EP 0 343 087 A1

**Description**

## DIORGANOPOLYSILOXANE A FONCTION ITACONATE

La présente invention concerne un diorganopolysiloxane à fonction itaconate et son utilisation notamment comme lubrifiant du PVC (polychlorure de vinyle) et comme fluide hydraulique.

Les brevets US-A-4 207 246, US-A-4 322 473 et US-A-4 405 469, décrivent des polyortganosiloxanes modifiés par un groupe organique à fonction succinate et leur utilisation comme lubrifiant des fibres textiles, des surfaces métalliques et comme fluides hydrauliques.

Dans la publication de I. GOODMAN J.A.C.S. 79,3 073 (1957) on décrit un procédé d'addition sur des monomères organiques à insaturation éthylénique tels que l'acétate de vinyle, l'acétate d'allyle d'organohydrogénochlorosilanes. Les produits d'addition sont ensuite hydrolysés pour donner des huiles ou, après chauffage, des résines solides.

Dans cette publication on ne décrit pas explicitement l'addition d'itaconate sur un organohydrogénodichlorosilane ou sur un organohydrogénochlorosilane mais seulement sur l'hydrogénotrichlorosilane.

Par ailleurs les réactions d'addition d'un monomère organique à insaturation éthylénique sur un hydrogénosilane ou un hydrogénopolysiloxane sont bien connues et sont par exemple décrits dans les brevets américains US-A-3 317 369, US-A-3 258 477 et US-A-4 160 775.

Cependant, à la connaissance de la demanderesse aucun document ne décrit explicitement le polymère diorganopolysiloxane à fonction itaconate tel que défini ci-dessous qui présente des propriétés remarquables notamment comme lubrifiant du PVC et comme fluide hydraulique.

La présente invention concerne en effet un diorganopolysiloxane portant par molécule au moins un motif de formule :

$$ZR_aSiO_{\frac{3-a}{2}} \qquad (1)$$

dans laquelle :
- a est 1 ou 2,
- le symbole Z est choisi parmi les radicaux $-CH_2CH(COOR')CH_2COOR'$ et $-C(CH_3)(COOR')\ CH_2\ COOR'$,
- les symboles R, identiques ou différents, sont choisis parmi les radicaux alkyle en $C_1$-$C_{20}$, vinyle, phényle et trifluoro-3,3,3 propyle et, dans le cas où a = 2 un des radicaux R peut être un hydroxyle,
- les symboles R', identiques ou différents, sont choisis parmi les radicaux hydrocarbonés monovalents en $C_1$-$C_{12}$ et les radicaux monovalents alcoxyalkyle en $C_2$-$C_{12}$.

Les autres motifs siloxyle du diorganopolysiloxane répondent de préférence à la formule :

$$R_bSiO_{\frac{4-b}{2}} \qquad (1bis)$$

dans laquelle R a la même signification que ci-dessus et b est égal à 2 ou 3.

De préférence, les diorganopolysiloxanes selon l'invention sont des polymères linéaires ou cycliques choisis parmi ceux de formule :

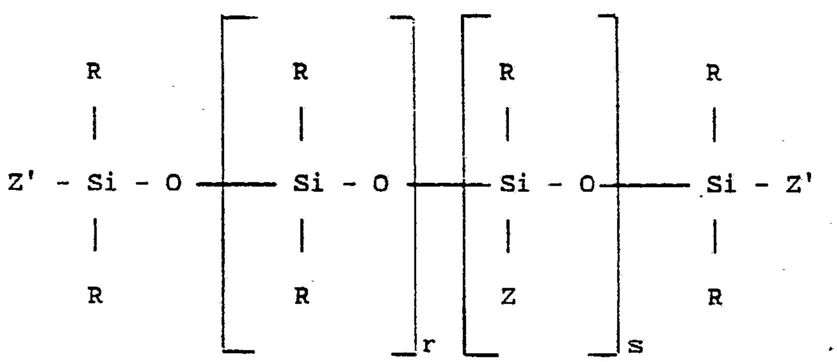

(2)

dans laquelle :
- les symboles R et Z ont la signification donnée ci-dessus,
- les symboles Z', identiques ou différents, sont choisis parmi les radicaux R et Z,
- r est un nombre entier compris entre 0 et 500 inclusivement,
- s est un nombre entier choisi entre 0 et 50 inclusivement, et, si s est 0, au moins un des deux symboles Z' et Z,

et ceux de formule :

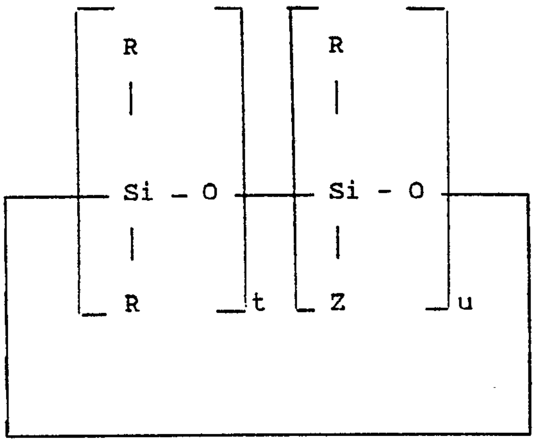

(3)

dans laquelle :
- R et Z ont la signification donnée ci-dessus,
- u est un nombre entier compris entre 1 et 20 et
- t est un nombre entier compris entre 0 et 20 inclus.
- t + u est supérieur ou égal à 3.

Les radicaux R alkyle préférés sont méthyle, éthyle, propyle, n-butyle, n-octyle et éthyle-2 hexyle. De préférence au moins 80 % en nombre des radicaux R sont méthyle.

Les radicaux R′ peuvent être choisis parmi :
- les radicaux alkyle en $C_1$-$C_{12}$ tels que les radicaux méthyle, éthyle, n-propyle, isopropyle, n-butyle, éthyle-2 hexyle, heptyle et dodécyle,
- les radicaux aryle, alkylaryle et arylealkyle en $C_6$-$C_{12}$ tels que les radicaux phényle, benzyle et tolyle,
- les radicaux alcoxyalkyle en $C_2$-$C_{12}$ tels que méthoxyméthyle, éthoxyméthyle, et méthoxy-2 éthyle.

On préfère plus particulièrement les polymères statistiques ou à blocs de formules (1), (2) et (3) présentant au moins l'une des caractéristiques suivants :
- R et R′ sont méthyle,
- r est compris entre 5 et 50 inclus,
- s est compris entre 2 et 20 inclus,
- t + u sont compris entre 3 et 10 inlcus.

Les polymères préférés selon l'invention se présentent généralement sous forme d'huile plus ou moins visqueuse, de viscosité comprise entre 2 et 500 000 mPa.s, de préférence entre 5 et 5 000, à 25 °C.

Les polymères selon l'invention peuvent être préparés notamment selon un premier procédé (A) de la manière suivante :

Au cours d'une première étape ($A_1$)) on additionne un itaconate de formule :

$CH_2 = C(COOR') CH_2COOR'$ (4)

dans laquelle R′ a la même signification qu'à la formule (1) sur un hydrogénoorganochlorosilane de formule :

$H\ Si\ R_a\ Cl_{3-a}$ (5)

dans laquelle R et a ont la même signification qu'à la formule (1).

On obtient ainsi un produit d'addition de formule :

$Z\ Si\ R_aCl_{3-a}$ (6)

dans laquelle R, a et Z ont la même signification qu'à la formule (1). Z symbolise les deux formes isomères obtenues selon que l'atome de silicium se lie à l'un ou à l'autre des deux atomes de carbone insaturés.

L'étape ($A_1$) peut être effectuée en masse ou en solution dans un solvant organique. La réaction est exothermique. On opère généralement sous reflux du mélange réactionnel à une température comprise entre 60 et 140 °C pendant une durée comprise généralement entre 10 minutes et 3 heures.

On peut soit couler le silane de formule (6) sur l'itaconate de formule (4) ou vice-versa, ou en même temps.

Il est préférable d'utiliser un excès molaire (de 10 à 50 %) de silane de formule (5).

Il est préférable en vue d'augmenter la cinétique de réaction d'opérer en présence d'un catalyseur. Les catalyseurs utilisables sont ceux utilisés pour faire la réaction d'hydrosilylation. Sont donc en particulier utilisables les péroxydes organiques, les radiations UV et les catalyseurs à base d'un métal du groupe du platine en particulier le platine, le ruthénium et le rhodium à la dose de 20 à 500 ppm (calculés en poids de métal) par rapport au poids de silane de formule (5).

Comme exemples de catalyseurs, on peut citer le platine métal sur noir de carbone, les complexes platine/oléfine décrits dans les brevets américains US-A-3 159 601 et US-A-3 159 662, l'acide chloroplatinique, l'acide chloroplatineux, les complexes du platine et d'un vinylpolysiloxane décrits dans le brevet américain US-A-3 419 593, les complexes du platine de degré voisin de zéro décrits dans les brevets américains US-A-3 715 334, US-A-3 775 452 et US-A-3 814 730 et les complexes de platine avec un produit organique à insaturation éthylénique décrits dans les brevets européens EP-A-188 978 et EP-A-190 530.

En fin de réaction les produits volatils sont éliminés par distillation sous vide. Le vide de pompe à eau de 0,1 à 3 KPa est généralement suffisant.

Au cours d'une deuxième étape ($A_2$) on effectue l'hydrolyse ou la cohydrolyse et la polycondensation d'un silane de formule (6).

Cette hydrolyse ou cohydrolyse et polycondensation peuvent être effectuées de préférence en phase aqueuse liquide en milieu acide (de préférence HCl) ou en milieu basique (de préférence $NH_4OH$) dans des conditions similaires à celles de l'hydrolyse des chlorosilanes telles que décrites aux pages 193 à 200 de l'ouvrage de NOLL "CHEMISTRY and TECHNOLOGY of SILICONES" Academic Press (1968).

La concentration en acide ou en base dans l'eau est comprise généralement entre 10 et 30 % en poids. Le milieu d'hydrolyse comporte toujours au moins 2 moles d'eau par mole de silane, généralement de 10 à 100 moles d'eau. L'hydrolyse peut être effectuée en continu ou en discontinu à température ambiante (20 °C) ou à une température comprise entre 5 et 90 °C. L'hydrolyse peut être effectuée à pression égale ou supérieure à la pression atmosphérique en continu ou en discontinu avec, au moins le procédé continu, réinjection d'eau pour maintenir une phase aqueuse constante.

En vue d'obtenir les polymères de formule (2) et (3) ou leur mélange, on hydrolyse et polycondense les silanes de formule (6) en présence éventuellement d'un dichlorodiorganosilane de formule :

$R_2\ Si\ Cl_2$ (7)

dans laquelle R a la définition donnée à la formule (1) ci-dessus.

La polycondensation peut être arrêtée par simple neutralisation du milieu réactionnel. Dans ce cas les polymères de formule (2) obtenus sont bloqués à chacune de leurs extrémités par un groupe hydroxyle ou par le motif $R_2\ Z\ Si\ O_{0,5}$ si on utilise le silane $R_2\ Z\ SiCl$.

On peut également arrêter la polycondensation en ajoutant un composé organosilicié susceptible de réagir avec les hydroxyle terminaux tels que les produits de formules :

$R_3\ Si\ Cl$, $R_3\ Si\ NH\ Si\ R_3$ et $R_3\ Si\ O\ Si\ R_3$

dans lesquelles les radicaux R ont la signification donnée à la formule (1) ci-dessus.

La durée de l'hydrolyse peut être comprise entre quelques secondes et plusieurs heures.

Après hydrolyse, la phase aqueuse est séparée de la phase siloxane par tout moyen physique approprié, généralement par décantation et extraction par un solvant organique comme l'éther isopropylique.

La phase siloxane peut être ultérieurement lavée à l'eau, puis distillée éventuellement pour séparer les polymères linéaires de formule (2) des polymères cycliques de formule (3).

Pour préparer les polymères de formules (1), (2) et (3), on peut également selon un deuxième procédé (B) partir du polymère correspondant dans lequel tous les radicaux Z sont des atomes d'hydrogène et par une réaction d'hydrosilylation, additionner un itaconate de formule (4) ci-dessus.

Ce polymère est dénommé par la suite polymère à SiH ; les groupes SiH peuvent être présents dans la chaîne et/ou aux extrémités de chaîne. Ces polymères à SiH sont des produits bien connus dans l'industrie des silicones et sont généralement disponibles dans le commerce.

Ils sont par exemple décrits dans les brevets américains US-A-3 220 972, US-A-3 436 366, US-A-3 697 473 et US-A-4 340 709.

Ce polymère à SiH peut être donc représenté par la formule :

$$Y - \underset{R}{\overset{R}{\underset{|}{\overset{|}{Si}}}} - O \left[ \underset{R}{\overset{R}{\underset{|}{\overset{|}{Si}}}} - O \right]_r \left[ \underset{H}{\overset{R}{\underset{|}{\overset{|}{Si}}}} - O \right]_s \underset{R}{\overset{R}{\underset{|}{\overset{|}{Si}}}} - Y \qquad (8)$$

dans laquelle R, r et s ont la signification donnée ci-dessus pour la formule (2) et les radicaux Y, identiques ou différents, sont choisis parmi les radicaux R et un atome d'hydrogène,

et par la formule :

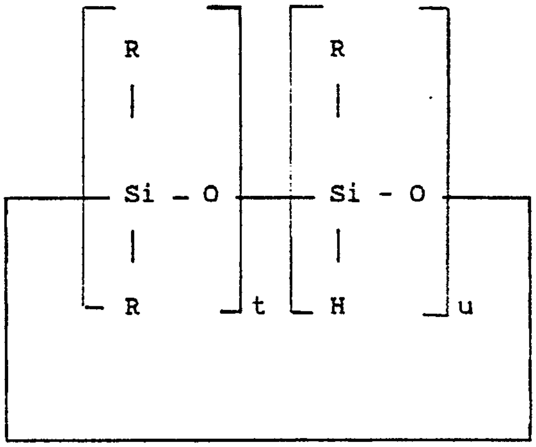

(9)

dans laquelle R, t et u ont la signification donnée ci-dessus pour la formule -(3).

Le procédé (B) met donc en oeuvre comme à l'étape ($A_1$) du procédé (A) une réaction d'hydrosilylation analogue et il est souhaitable d'effecteur cette réaction avec les mêmes catalyseurs que ceux indiqués à l'étape ($A_1$).

Cette réaction peut s'effectuer en masse ou au sein d'un solvant organique à une température comprise entre la température ordinaire (25 °C) et 170 °C.

Les produits volatils sont éliminés en fin de réaction par distillation sous vide et/ou par extraction.

Le procédé (A) permet d'obtenir des polymères de formule (2) présentant des groupes hydroxyle terminaux et des polymères de formules (2) et (3) présentant des radicaux R dont certains peuvent être des radicaux vinyle.

Le procédé (B) permet d'avoir des polymères de structure bien définie par le choix des polymères à SiH de départ.

Les polymères de formule (1), (2) et (3) présentent de nombreuses utilisations dans l'industrie. Ils sont en particulier utilisables comme lubrifiant du PVC (polychlorure de vinyle) rigide ou plastifié à une teneur de 0,01 à 2 parties, de préférence de 0,05 à 1 partie de polymère pour 100 parties de résine PVC.

Les polymères de formule (1), (2) et (3) présentent un effet un caractère suffisant de compatibilité avec le PVC pour ne pas exsuder mais pour assurer un rôle lubrifiant suffisant mais ils sont suffisamment incompatibles pour assurer la lubrification.

Les polymères de formule (1), (2) et (3) sont également utilisables comme fluides hydrauliques.

D'autres avantages et caractéristiques de la présente invention apparaîtront à la lecture des exemples suivants.

- EXEMPLE 1 :

Dans un réacteur tricol de 2 litres équipé d'un réfrigérant, d'un agitateur et d'une ampoule de coulée on charge 907 g soit 5,74 moles d'itaconate de méthyle et 129 mg d'acide chloroplatinique ($H_2PtCl_6$).

On porte la température à 116 °C puis on coule pendant 65 minutes 792,5 g (6,89 moles) $CH_3HSiCl_2$, soit un excès molaire de 20 % par rapport à l'itaconate.

La réaction étant exothermique, la température se maintient aux environs de 120 °C sans addition supplémentaire de calories. En fin de coulée la température est de 112 °C. On maintient le mélange réactionnel au reflux durant 1 heure 50 minutes puis on distille l'excès de $CH_3HSiCl_2$ et on obtient 1 274 g d'un adduct liquide dont le point d'ébullition est de 80 °C sous 0,13 KPa. Le rendement pondéral en adduct est de 71 %.

L'analyse RMN du produit d'addition indique qu'il présente environ 60 % molaire radicaux $-CH_2CH(COOCH_3)CH_2COOCH_3$ et 40 % molaire de motif $-C(CH_3)(COOCH_3)CH_2COOCH_3$.

- EXEMPLE 2 :

Dans le même réacteur tricol que celui utilisé à l'exemple 1, on charge 340 g d'une solution aqueuse d'ammoniaque $NH_4OH$ à 20 % en poids et 370 ml d'eau. On coule pendant 50 minutes, 500 g (1,83 mole) de l'adduct obtenu à l'exemple 1 en solution dans 500 ml d'éther isopropylique, la température étant maintenue à 25 °C.

En fin d'hydrolyse on décante les eaux mères puis on ajoute de nouveau 500 ml d'éther isopropylique pour favoriser la décantation. On effectue de nouveau un lavage à l'eau de la solution organique décantée, on sèche et on dévolatilise jusqu'à une température de 100 °C sous un vide de 2 KPa.

On obtient alors 323 g d'une huile limpide ayant une teneur pondérale en groupe hydroxyle de 1,8 %, une viscosité à 25 °C de 35 mPa.s et un pourcentage pondéral de fonction ester de 54,2 %

- EXEMPLE 3 :

Dans un réacteur tricol de 10 litres on charge 2 800 g d'eau sur laquelle on coule pendant une heure 903 g (7 moles) de $(CH_3)_2SiCl_2$ et 98 g (0,35 mole) de l'adduct obtenu à l'exemple 1. Durant la coulée la température

s'élève graduellement de 25 à 65 °C. Après la coulée on maintient le mélange réactionnel sous agitation pendant 30 minutes et on décante les eaux acides. On ajoute 350 ml d'éther isopropylique, on effectue trois lavages et on concentre la solution éthérée suivant un premier palier jusqu'à 1 00 °C à pression atmosphérique puis jusqu'à 80 °C sous un vide de 2,5 KPa.

On obtient alors 456 g d'huile limpide et incolore ayant les caractéristiques suivantes :

| | | |
|---|---|---|
| - viscosité à 25 °C | : | 20 mPa.s, |
| - % (pondéral) d'hydroxyle | : | 1 %, |
| - pourcentage pondéral de fonction ester | : | 4,8 % |
| - rendement pondéral en huile | : | 77 %. |

- EXEMPLE 4 :

On charge dans un réacteur tricol de 5 litres 816 g d'une huile de formule :
$(CH_3)_3SiO(CH_3HSiO)_{17}\{(CH_3)_2SiO)\}_{31}Si(CH_3)_3$
et 948 g d'itaconate de méthyle, le tout dans 1 540 g de xylène ainsi que de l'acide chloroplatinique en quantité telle que l'on ait environ 150 ppm de platine métal par rapport au poids de polymère siloxane. On porte la température à 145 °C que l'on maintient pendant 24 heures. Ensuite on distille le xylène et l'itaconate de méthyle en excès par chauffage à 140 °C sous un vide de 2,5 KPa.

On obtient alors 1370 g d'une huile limpide et incolore de viscosité 950 mPa.s à 25 °C et un pourcentage pondéral de fonction ester de 28,2 %.

- EXEMPLE 5 :

Dans un réacteur de un litre, équipé d'un réfrigérent et d'une agitation, on charge en même temps :
- 174 g, soit 1,1 mole d'itaconate de méthyle,
- 46 g d'un hydrogénométhylsiloxane cyclique de pureté 92 % de formule :

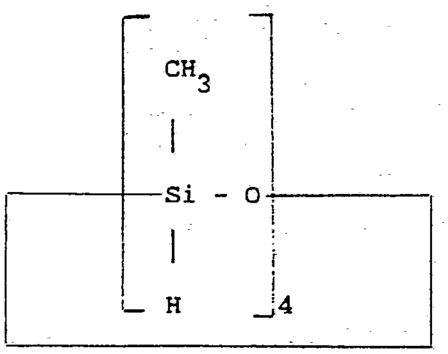

- 25 mg de $H_2PtCl_6$ $(6H_2O)$

On porte le mélange réactionnel à 135 °C et maintient la température entre 135 et 160 °C pendant 1 heure 30 minutes.

On distille l'excès d'itaconate de méthyle par chauffage du mélange réactionnel à 160 °C sous 0,133 KPa. On obtient 146 g d'huile dévolatilisée de couleur jaune orangée, de viscosité 2 240 mPa.s à 25 °C, dont le pourcentage pondéral d'ester est de 50 %.

Le spectre de masse et le spectre UV ($CHCl_3$) confirme que l'huile obtenue est bien le produit de formule :

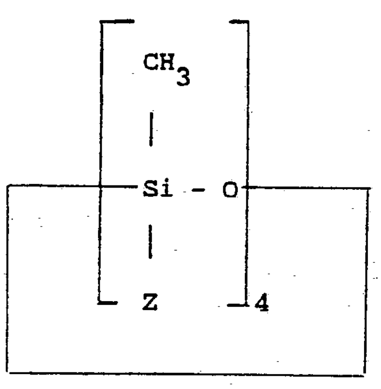

Z étant un radical itaconyle.

**Revendications**

1. - Diorganopolysiloxane portant par molécule au moins un motif de formule :

$$ZR_aSiO_{\frac{3-a}{2}} \quad (1)$$

dans laquelle :
- a est 1 ou 2,
- le symbole Z est choisi parmi les radicaux $-CH_2CH(COOR')CH_2COOR'$ et $-c(CH_3)(COOR')\ CH_2\ COOR'$,
- les symboles R, identiques ou différents, sont choisis parmi les radicaux alkyle en $C_1$-$C_{20}$, vinyle, phényle et trifluoro-3,3,3 propyle et, dans le cas où a = 2 des radicaux R peut être un hydroxyle,
- les symboles R′, identiques ou différents, sont choisis parmi les radicaux hydrocarbonés saturés monovalents en $C_1$-$C_{12}$ et les radicaux monovalents alcoxyalkyle en $C_2$-$C_{12}$.

2. - Diorganopolysiloxane selon la revendication 1, choisi parmi ceux de formules :

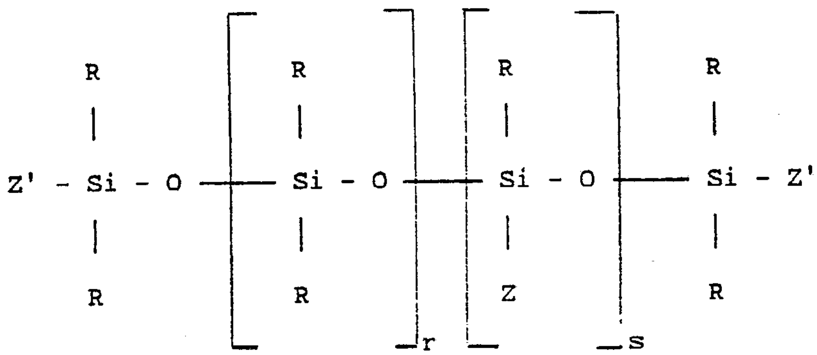
(2)

dans laquelle :
- les symboles R et Z ont la signification donnée à la revendications 1,
- les symboles Z′, identiques ou différents, sont choisis parmi les radicaux R et Z,
- r est un nombre entier compris entre 0 et 500 inclusivement,
- s est un nombre entier choisi entre 0 et 50 inclusivement, et, si s est 0, au moins un des deux symboles Z′ et Z,

et ceux de formule :

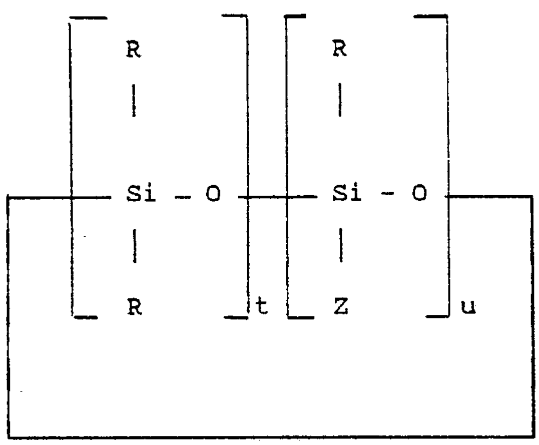
(3)

dans laquelle :
- R et Z ont la signification donnée à la revendication 1,
- u est un nombre entier compris entre 1 et 20 et
- t est un nombre entier compris entre 0 et 20 inclus.
- t + u est supérieur ou égal à 3.

3. - Diorganopolysiloxane selon la revendication 2, caractérisé en ce que :
- R et R′ sont méthyle,
- r est compris entre 5 et 50 inclus,
- s est compris entre 2 et 20 inclus,

- t + u sont compris entre 3 et 10 inclus.

4. - Polymère selon la revendication 2 ou 3, caractérisé en ce qu'il présente une viscosité à 25 °C comprise entre 5 et 5 000 mPa.s.

5. - Procédé de préparation d'un polymère tel que défini à l'une quelconque des revendications 2 à 4, caractérisé en ce que :

1a) on additionne un itaconate de formule :

$CH_2=C(COOR')CH_2COOR'$ (4)

sur un hydrogénoorganodichlorosilane de formule :

$H\,Si\,R_a\,Cl_{3-a}$ (5)

pour obtenir un silane de formule :

$Z\,R_a\,Si\,Cl_{3-a}$ (6)

dans lesquelles R, R' a et Z ont la même signification qu'à la formule (1).

1b) on effectue l'hydrolyse et la polymérisation du silane de formule (6) en vue d'obtenir le polymère de formules (2) et (3) ou leur mélange.

6. - Procédé selon la revendication 5, caractérisé en ce qu'on ajoute à l'étape 1b) un dichlorodiorganosilane de formule (7) $R_2\,SiCl_2$, R ayant la même signification qu'à la formule (1).

7. - Procédé selon la revendication 5 ou 6, caractérisé en ce qu'on utilise un catalyseur à base d'un métal du groupe du platine au cours de l'étape 1a).

8. - Procédé de préparation d'un polymère tel que défini à l'une quelconque des revendications 2 à 4, caractérisé en ce qu'on effectue une réaction d'hydrosilylation d'un polymère choisi parmi ceux de formules :

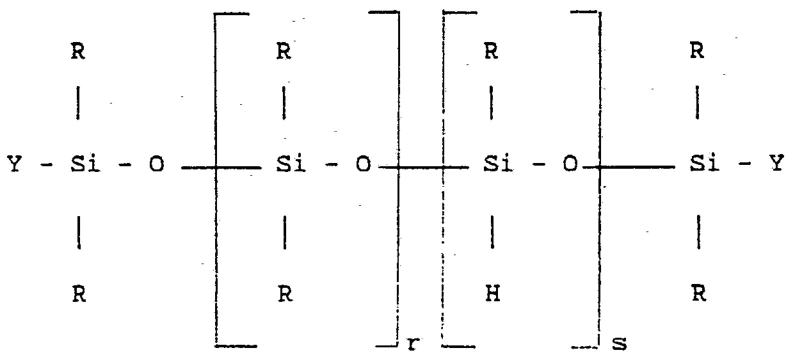

(8)

dans laquelle R, r et s ont la signification donnée ci-dessus pour la formule (2) et les radicaux Y, identiques ou différents, sont choisis parmi les radicaux R et un atome d'hydrogène,
et par la formule :

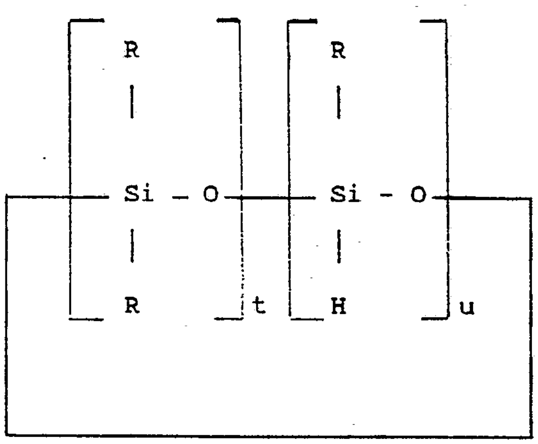

(9)

dans laquelle R, t et u ont la signification donnée ci-dessus pour la formule (3).
sur un itaconate de formule :

$CH_2 = C(COOR')CH_2COOR'$ (4)

dans lesquelles R'a la signification donnée à la revendication 1.

9. - Procédé selon la revendication 8, caractérisé en ce qu'on utilise un catalyseur à base d'un métal du groupe du platine.

10. - Utilisation comme lubrifiant du PVC d'un diorganopolysiloxane tel que défini à l'une quelconque des revendications 1 à 4.

Office européen des brevets

# RAPPORT DE RECHERCHE EUROPEENNE

Numero de la demande

EP 89 42 0157

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 405 469 (W. HAFNER)<br>* Revendications 1,2; colonne 4, lignes 49-64 * | 1 | C 08 G 77/38<br>C 08 G 77/14<br>C 08 L 27/06<br>C 10 M 107/50 |
| A | US-A-4 101 492 (M.K. LINDEMANN)<br>* Revendication 1; colonne 2, lignes 62-65 * | 1 | |
| A | GB-A-1 058 022 (I.C.I.)<br>* Revendications 1,2,4; page 2, lignes 39-42 * | 1 | |
| A | US-A-4 647 683 (P.A. MANIS)<br>* Revendication 1; colonne 3, lignes 51-62; colonne 5, lignes 61-68 * | 1 | |
| | | | DOMAINES TECHNIQUES RECHERCHES (Int. Cl.4) |
| | | | C 08 G<br>C 07 F<br>C 08 K |

Le présent rapport a été établi pour toutes les revendications

| Lieu de la recherche | Date d'achèvement de la recherche | Examinateur |
|---|---|---|
| LA HAYE | 29-08-1989 | DEPIJPER R.D.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)